# EUROPÄISCHE PATENTSCHRIFT

(11) **EP 4 217 179 B1**
(45) Veröffentlichungstag und Bekanntmachung des Hinweises auf die Patenterteilung: **13.08.2025**
(21) Anmeldenummer: 21778463.6
(22) Anmeldetag: 20.09.2021
(51) Int. Cl.: B29C 49/24, B29C 49/42, B29K 711/10, B29K 601/00, B29C 49/06, B29B 11/14, B29C 49/48, B65D 5/56, B65D 23/02, D21J 3/00

(54) **VERFAHREN, SYSTEM UND BLASFORMMASCHINE ZUM BLASFORMEN EINES BEHÄLTERS**
METHOD, SYSTEM, AND BLOW MOLDING MACHINE FOR BLOW MOLDING A CONTAINER
PROCÉDÉ, SYSTÈME, ET MACHINE DE MOULAGE PAR SOUFFLAGE POUR LE MOULAGE PAR SOUFFLAGE D'UN RÉCIPIENT

(30) Priorität: 23.09.2020 CH 12032020
(43) Veröffentlichungstag der Anmeldung: 02.08.2023
(73) Patentinhaber: ALPLA Werke Alwin Lehner GmbH & Co. KG, 6971 Hard (AT)
(72) Erfinder: URABL, Stephan, 6973 Höchst (AT)
(74) Vertreter: Bohest AG Branch Ostschweiz
(86) Internationale Anmeldenummer: PCT/EP2021/075772
(87) Internationale Veröffentlichungsnummer: WO 2022/063717

(56) Entgegenhaltungen:
- EP-A1- 2 803 467
- EP-A1- 3 375 593
- US-A1- 2015 308 050
- US-A1- 2020 283 184
- US-A1- 2024 424 724

## Beschreibung

Die vorliegende Erfindung betrifft ein Verfahren zum Blasformen eines Behälters, ein System aus einem Greifer und einer Kopfplatte eines Blasformwerkzeuges zur Durchführung des Verfahrens sowie eine Blasformmaschine umfassend ein derartiges System gemäss dem Oberbegriff der unabhängigen Ansprüche.

Aus dem Stand der Technik sind unterschiedliche Behälter zur Aufnahme von Flüssigkeit bekannt. So sind beispielsweise Glasflaschen oder Kunststoffflaschen zur Aufnahme von Getränken bekannt geworden. Es wurden ebenfalls bereits Behälter vorgeschlagen, die aus faserbasiertem Material gefertigt sind.

Ein faserbasierter Behälter wurde in der WO 2012/139590 A1 vorgeschlagen. Zur Herstellung dieses Behälters wird sogenannte Pulpe in eine Form eingebracht und mit einem flexiblen Ballon in dieser Form an eine entsprechende Wandung gedrückt und entsprechend komprimiert.

Pulpe ist eine Mischung aus Fasern und Wasser, insbesondere Naturfasern wie Hanffasern, Zellulosefasern oder Flachsfasern oder einer Mischung davon. Gegebenenfalls weist die Pulpe Zusatzstoffe auf, wie beispielsweise aus der PCT/EP2019/076839 bekannt, die beispielsweise ein Aushärten der komprimierten Pulpe verbessern oder Einfluss auf das spätere Aussehen haben oder generell die Eigenschaften der Pulpe oder des späteren Behälters verändern.

Bei diesen Behältern besteht die Gefahr, dass diese durch im Behälter gelagerte Flüssigkeit aufweichen und beispielsweise undicht werden oder dass Stoffe aus dem Behälter in die Flüssigkeit diffundieren.

Es ist vorgeschlagen worden, derartige faserbasierte Behälter mit einer inneren Schicht aus Kunststoff zu versehen, insbesondere innerhalb des faserbasierten Behälters eine Kunststoffflasche anzuordnen, welche entsprechende Barrierefunktionen übernehmen kann. Der faserbasierte Behälter stellt hier also lediglich eine Hülle für einen dünnwandigen Kunststoffbehälter bereit. Eine derartige Kombination ist aus der WO 2018/167192 A1 bekannt geworden. Eine weitere derartige Kombination ist aus der US 2015/308050 A1 bekannt geworden.

Typischerweise wird also eine faserbasierte Hülle bereitgestellt in die eine Kunststoffschicht oder eine Kunststoffauskleidung eingebracht wird. Dies geschieht typischerweise in der Form, dass in einem ersten Schritt die faserbasierte Hülle bereitgestellt wird und in einem zweiten Schritt ein Preform in diese Hülle eingebracht wird. Im Anschluss wird dieser Preform innerhalb der faserbasierten Hülle aufgeblasen, bis dieser eine Innenkontur der faserbasierten Hülle berührt, bzw. mit der Innenkontur der faserbasierten Hülle in Kontakt ist. Dieser Aufblasvorgang geschieht typischerweise in einer Blasform deren Kavität der Aussenkontur der faserbasierten Hülle entspricht. Da, im Gegensatz zu herkömmlichen Blasverfahren, zwei separate Elemente gehandhabt werden müssen, ist ein derartiger Vorgang ungleich komplizierter, da der Preform relativ zur faserbasierten Hülle und diese wiederum innerhalb der Blasform positioniert und gehalten werden muss.

Ein beispielhafter Prozess ist beispielsweise in der EP 3 375 593 A1 beschrieben. Die EP 3 375 593 A1 beschreibt für das Herstellen eines Behälters einen Preform, der in seinem Halsbereich Fortsätze aufweist, die mit einer entsprechenden faserbasierten Hülle in Eingriff gebracht werden können, mit dem Ziel, dass die Hülle und der Preform miteinander verbunden bleiben. Es hat sich jedoch herausgestellt, dass diese Art der Verbindung fehleranfällig ist, da die Innenkontur respektive die innere Oberfläche der Hülle, je nach spezifischen Eigenschaften der Pulpe, aus der der die Hülle geformt wird, unterschiedlich grossen Abweichungen unterworfen. Dies ist insbesondere im Halsbereich nachteilig, da für eine saubere Verpressung zwischen dem Preform bzw. seinen Fortsätzen und der faserbasierten Hülle gewisse Toleranzgrenzen eingehalten werden müssen, dies jedoch aufgrund der unterschiedlichen Prozessparameter und der sich unter Umständen verändernden Beschaffenheit der Pulpe nicht immer möglich ist.

Es ist Aufgabe der Erfindung, einen oder mehrere Nachteile des Standes der Technik zu beheben. Insbesondere sollen ein Verfahren und/oder ein System aus einem Greifer und einer Kopfplatte einer Blasform zum Blasformen eines Behälters bereitgestellt werden, das die Produktion vereinfacht und die Prozesssicherheit erhöht.

Diese Aufgabe wird durch die in den unabhängigen Patentansprüchen beschriebenen Verfahren und Vorrichtungen gelöst. Weitere vorteilhafte Ausführungsformen ergeben sich aus den abhängigen Patentansprüchen.

Ein erfindungsgemässes Verfahren zum Blasformen eines Behälters mit einer faserbasierten Hülle umfasst die Schritte:
- Bereitstellen einer faserbasierten Hülle
- Einbringen eines Prefoms in die faserbasierte Hülle zum Herstellen eines Halbfabrikats
- Greifen des Halbfabrikats mit einem Greifer
- Überführen des Halbfabrikats in ein Blasformwerkzeug und
- Blasen des Behälters.

Der Greifer presst eine Innenwandung der faserbasierten Hülle auf eine Aussenfläche des Preforms. Die Aussenfläche des Preforms kann sich am Hals des Preforms befinden, es ist jedoch auch möglich, dass sich die Aussenfläche auf einem Bereich eines Fortsatzes am Hals des Preforms befindet.

Unter einem Halbfabrikat wird vorliegend die Kombination aus einer faserbasierten Hülle und einem relativ zu dieser faserbasierten Hülle angeordneten Preform verstanden. Es handelt sich bei dieser relativen Positionierung bereits um die Endlage die ein Preformhals im Bezug zur faserbasierten Hülle aufweist.

In Bezug auf Achsen und/oder Richtungen entspricht eine Längsachse oder eine axiale Richtung jener Richtung, die sich von einem Boden des Preforms oder des Behälters zur Öffnung des Preforms oder des Behälters erstreckt. Ausgehend von dieser Achse ist ebenfalls die radiale Richtung definiert. Die axiale Richtung liegt somit ebenfalls im Wesentlichen in einer Ebene von Blasformtrennflächen.

Durch das Pressen einer Innenwandung der faserbasierten Hülle auf eine Aussenfläche des Preforms durch den Greifer wird also eine Kraft zwischen diese beiden Flächen induziert und entsprechend die Reibungskraft zwischen diesen beiden Flächen vergrössert. Mit anderen Worten kann durch das Positionieren eines Greifers auf einer Aussenfläche der faserbasierten Hülle diese mitsamt dem Preform sicher gehalten werden. Das Halbfabrikat aus Preform und faserbasierter Hülle kann einfach und sicher manipuliert werden, insbesondere einfach und sicher in eine Blasform überführt werden.

Dabei ist es vorzugsweise vorgesehen, dass ab dem ersten Greifen des Halbfabrikats mit dem Greifer bis zum Einbringen in die Blasform ein gleichmässiger Druck auf die faserbasierte Hülle aufgebracht wird, sodass diese im Wesentlichen konstant auf den Preform gepresst wird.

Die Prozesssicherheit kann dadurch weiter erhöht werden.

Zusätzlich kann vorgesehen sein, dass der Greifer während des Blasvorgangs das Halbfabrikat kontinuierlich umgreift.

Der Greifer kann durch das kontinuierliche Umgreifen während des Blasvorgangs zusätzlich eine Positionierungsfunktion eines Teils der Blasform übernehmen. Der Greifer kann also als Mittel zum Halten und Positionieren des Halbfabrikats innerhalb der Blasform und/oder während des Blasens verwendet werden.

Zusätzlich oder alternativ kann vorgesehen sein, dass der Greifer während des Blasvorgangs in Anlage mit dem Blasformwerkzeug ist, insbesondere in Anlage mit einer Kopfplatte des Blasformwerkzeuges.

Der Greifer kann sich somit auf dem Blasformwerkzeug, respektive auf einer Kopfplatte des Blasformwerkzeuges, abstützen und so axiale Kräfte, die auf den Greifer bzw. auf das Halbfabrikat wirken, auf die Blasform übertragen.

Preforms weisen typischerweise sogenannte Supportringe auf um die Manipulation der Preforms zu erleichtern. Ein derartiger Supportring ist beispielsweise ebenfalls zum Preform der EP 3 375 593 A1 beschrieben.

Der Supportring unterteilt einen Preform und entsprechend ebenfalls einen Behälter in zwei Bereiche. Insbesondere trennt der Supportring einen Verschlussbereich des Behälters vom restlichen Behälter. Wie beispielsweise aus der vorgenannten EP-Anmeldung ersichtlich ist, ist die faserbasierte Hülle unterhalb des Supportrings angeordnet. Das Verfahren wie vorliegend beschrieben weist also typischerweise einen Greifer auf, der das Halbfabrikat unterhalb des Supportrings greift und die faserbasierte Hülle entsprechend unterhalb dieses Supportrings auf eine Aussenfläche des Preforms presst.

Es kann jedoch auch vorgesehen sein, dass der Greifer das Halbfabrikat sowohl unterhalb des Supportrings als auch oberhalb des Supportrings des Preforms greift.

Dazu kann der Greifer im Bereich des Supportrings im Querschnitt im Wesentlichen C-förmig ausgebildet sein.

Durch das Greifen des Halbfabrikats sowohl unterhalb des Supportrings als auch oberhalb des Supportrings kann ein axiales Verschieben des Halbfabrikats zuverlässig verhindert werden bzw. das Halbfabrikat in Bezug zu seiner axialen Lage auf eine bestimmte Position eingestellt werden.

Dazu kann vorgesehen sein, dass der Greifer eine erste Greifbacke und eine zweite Greifbacke aufweist die zueinander in axialer Richtung beabstandet sind.

Es kann vorgesehen sein, dass beim Einbringen des Preforms in die faserbasierte Hülle ein oberes Ende der faserbasierten Hülle in Anlage mit dem Supportring gebracht wird.

Dies ermöglicht eine relative Positionierung des Preforms in Bezug zur faserbasierten Hülle. Dabei ist es insbesondere vorteilhaft, wenn die faserbasierte Hülle vor dem Bereitstellen auf eine entsprechende Länge konfektioniert wurde.

Vorzugsweise greift der Greifer das Halbfabrikat von zumindest zwei Seiten und klemmt das Halbfabrikat ebenfalls von zumindest zwei Seiten ein.

Durch das Einklemmen von zwei Seiten kann das Halbfabrikat im Greifer zentral positioniert werden. Dabei kann vorgesehen sein, dass der Greifer zum Greifen des Halbfabrikats von zumindest zwei Seiten zwei Schenkel aufweist, die in Bezug zur Längsachse einander gegenüberliegend angeordnet sind.

Dabei ist es typischerweise vorgesehen, dass nach dem Überführen des Halbfabrikats in das Blasformwerkzeug dieses geschlossen wird. Typischerweise weisen Blasformwerkzeuge zwei Blasformhälften auf, die entlang einer Trennebene miteinander verbunden werden können. Nach dem Blasen des Behälters wird das Blasformwerkzeug geöffnet und der nunmehr fertig geblasenen Behälter mit dem Greifer aus dem Blasformwerkzeug entfernt und beispielsweise an eine Fördereinrichtung zur weiteren Verarbeitung übergeben.

Ein weiterer Aspekt der Erfindung betrifft ein System aus einem Greifer und einer Kopfplatte eines Blasformwerkzeuges zur Durchführung des vorliegend beschriebenen Verfahrens. Der Greifer weist eine erste Greifbacke mit einer Höhe auf und die Kopfplatte weist eine Vertiefung auf mit einer Tiefe, die der Höhe der Greifbacke entspricht. Alternativ kann die Kopfplatte einen Vorsprung aufweisen mit einer Höhe die der Höhe der Greifbacke entspricht.

Durch das Bereitstellen einer Vertiefung mit der gleichen Höhe wie die Greifbacke kann die Greifbacke innerhalb der Kopfplatte in die Vertiefung eingebracht werden wobei eine Oberkante der Greifbacke im Wesentlichen in der gleichen Ebene zu liegen kommt wie eine Oberkante der Kopfplatte. Mit anderen Worten ist durch eine entsprechende Vertiefung in der Kopfplatte im Zusammenhang mit der Greifbacke eine im Wesentlichen zusammenhängende, in einer Ebene liegende, Fläche bereitstellbar auf der beispielsweise ein Supportring des Preforms gleichmässig abgestützt werden kann. Falls an der Kopfplatte entsprechende Vorsprünge vorgesehen sind, sind diese derart angeordnet, dass sie einen Freiraum zur Greifbacke hin derart auffüllen, das ebenfalls eine im Wesentlichen zusammenhängende, in einer Ebene liegende, Fläche bereitgestellt ist.

Die Vertiefung kann eine Aussenkontur aufweisen die im Wesentlichen einer Aussenkontur der Greifbacke entspricht.

Die Greifbacke kann somit passgenau in die Vertiefung eingeführt werden und ein seitliches Verschieben der Greifbacke ist verhindert. Durch entsprechende radiale Anschläge kann die Greifbacke in Bezug zur Längsachse zuverlässig und genau positioniert werden.

Der Greifer kann eine zweite Greifbacke aufweisen, die von der ersten Greifbacke beabstandet ist, derart, dass zwischen der ersten Greifbacke und der zweiten Greifbacke ein Supportring einbringbar ist. Die erste Greifbacke ist somit zur zweiten Greifbacke axial beabstandet. Die erste Greifbacke und die zweite Greifbacke bilden somit zusammen einen in etwa C-förmigen Querschnitt.

Somit kann der Greifer das Halbfabrikat sowohl unterhalb des Supportrings als auch oberhalb des Supportrings des Preforms greifen.

Durch das Greifen des Halbfabrikats sowohl unterhalb des Supportrings als auch oberhalb des Supportrings kann ein axiales Verschieben des Halbfabrikats zuverlässig verhindert werden bzw. das Halbfabrikat in Bezug zu seiner axialen Lage auf eine bestimmte Position eingestellt werden.

Es kann vorgesehen sein, dass der Greifer einen ersten Schenkel und einen zweiten Schenkel aufweist, wobei an jedem Schenkel eine erste Greifbacke angeordnet ist.

Diese beiden Schenkel sind in einer Endlage, also während des Greifvorgangs, wenn das Halbfabrikat im Greifer eingeklemmt ist, einander gegenüberliegend angeordnet.

Durch diese Anordnung kann der Greifer das Halbfabrikat von zumindest zwei Seiten einklemmen.

Durch das Einklemmen von zwei Seiten kann das Halbfabrikat im Greifer zentral positioniert werden.

Es kann vorgesehen sein, dass zumindest an einem, vorzugsweise an jedem, Schenkel eine zweite Greifbacke angeordnet ist.

Wie bereits dargelegt ermöglicht dies das exakte axiale Positionieren des Halbfabrikats innerhalb des Greifers und damit während des Blasvorgangs ebenfalls relativ zur Blasform.

Es kann vorgesehen sein, dass die erste Greifbacke und/oder jede erste Greifbacke eine Greiffläche aufweist, die sich entlang eines Kreisrings über einen Winkel von mindestens 30° erstreckt. Dies stellt einerseits sicher, dass das Halbfabrikat über einen minimalen Bereich umfasst ist, andererseits ist sichergestellt, dass sich eine Greifkraft über eine bestimmte Minimalfläche verteilt und somit eine Pressung der faserbasierten Hülle auf den Preform einen Grenzwert nicht überschreitet.

Gleichermassen kann die zweite Greifbacke und/oder jede zweite Greifbacke eine Greiffläche aufweisen, die sich entlang eines Kreisrings über einen Winkel von mindestens 30° erstreckt. Dies stellt einerseits sicher, dass das Halbfabrikat über einen minimalen Bereich umfasst ist, andererseits ist sichergestellt, dass sich eine Greifkraft über eine bestimmte Minimalfläche verteilt und somit eine Pressung des Preforms einen Grenzwert nicht überschreitet.

Die erste Greiffläche und die zweite Greiffläche können in einer radialen Richtung zueinander versetzt sein, insbesondere um einen Versatz, der einer Wandstärke der faserbasierten Hülle entspricht. Dabei ist die zweite Greiffläche, d.h. die Greiffläche die oberhalb des Supportrings zu liegen kommt, näher zu der Längsachse angeordnet als die erste Greiffläche, die unterhalb des Supportrings zu liegen kommt.

In dieser Konfiguration verteilt sich der Druck auf den Preform oberhalb des Supportrings und auf die Kombination aus Preform und faserbasierter Hülle unterhalb des Supportrings gleichmässig.

Ein weiterer Aspekt der vorliegenden Erfindung betrifft eine Blasformmaschine umfassend ein System wie vorliegend beschrieben.

Dies ermöglicht das Bereitstellen einer vollständigen Produktionseinheit mit sämtlichen aufeinander abgestimmten Elementen. Anhand von schematischen Figuren wird die Erfindung nachfolgend anhand von Ausführungsbeispielen erläutert. Es zeigt:
- Figur 1:: eine perspektivische Ansicht eines Schenkels eines Greifers;
- Figur 2:: einen Preform;
- Figur 3:: eine perspektivische Ansicht einer faserbasierten Hülle;
- Figur 4:: einen Querschnitt durch ein Halbfabrikat während des Greifens;
- Figur 5:: eine perspektivische Ansicht einer Blasform vor dem Schliessen;
- Figur 6:: eine Detailansicht auf die Blasform aus der Figur 5 nach dem Schliessen.

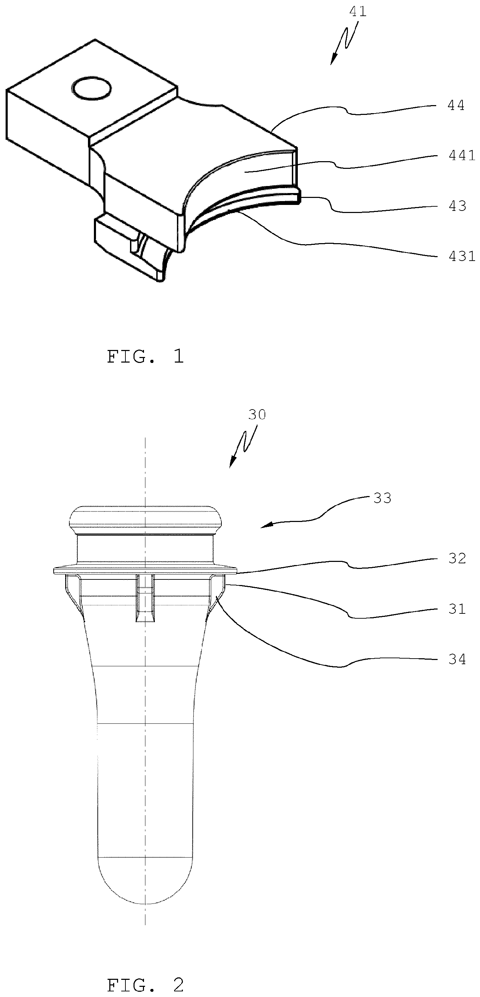

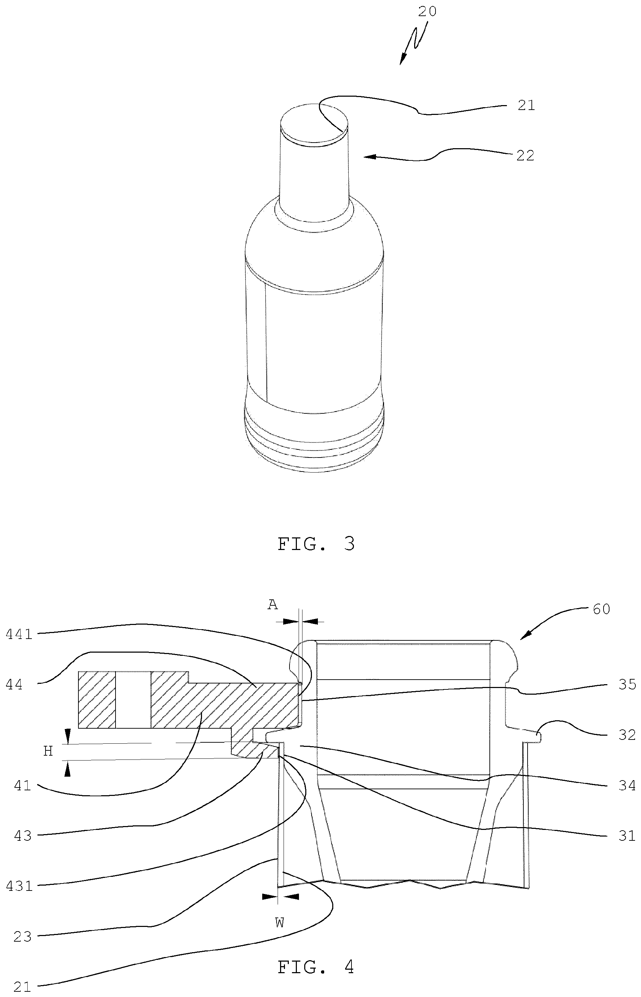

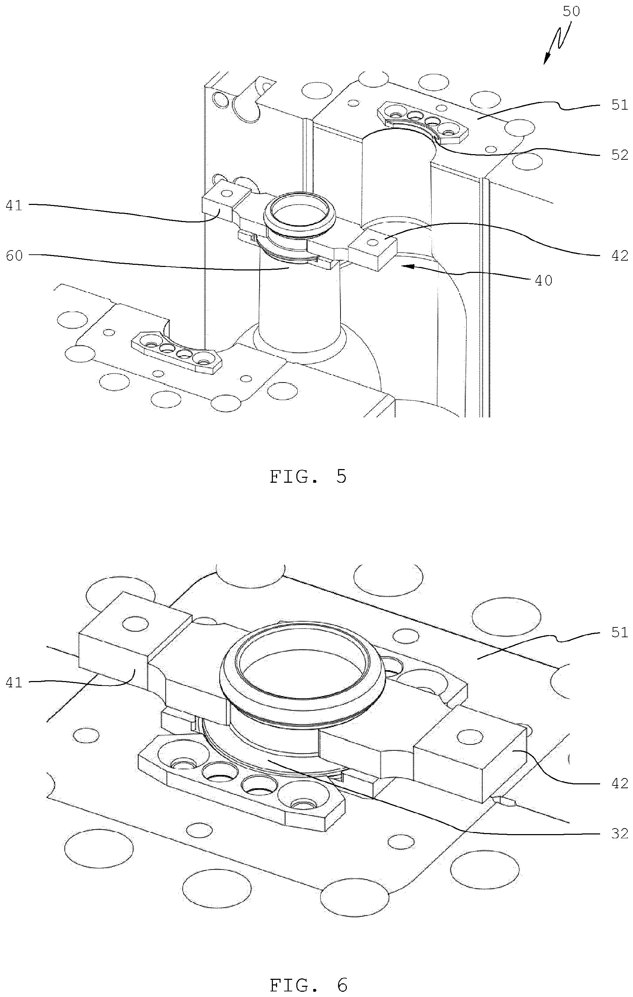

Die Figur 1 zeigt eine perspektivische Ansicht eines Schenkels 41 eines Greifers 40 (siehe Figur 5). Der Schenkel 41 weist eine erste Greifbacke 43 und eine zweite Greifbacke 44 auf. An der ersten Greifbacke 43 ist eine Greiffläche 431 angeordnet und an der zweiten Greifbacke 44 eine Greiffläche 441. Die Greifflächen 441 und 431 erstrecken sich jeweils entlang eines Kreisrings über einen Winkel von 30°. Die erste Greifbacke 43 ist zu der zweiten Greifbacke 44 axial beabstandet. Im Querschnitt bildet die erste Greifbacke 43 mit der zweiten Greifbacke 44 einen im Wesentlichen C-förmigen Querschnitt. Dieser C-förmige Querschnitt ist ausgebildet um einen entsprechenden Supportring 32 (siehe Figur 2) aufzunehmen. In Bezug zur zweiten Greifbacke 44 ist die erste Greifbacke 43 radial nach aussen versetzt (siehe dazu ebenfalls die Figur 4).

Insbesondere an der Greiffläche 431 der ersten Greifbacke 43 können Konturen ausgebildet sein, die die Reibung zwischen dieser Greiffläche 431 und einer zu greifenden faserbasierten Hülle 20 verbessern.

Die Figur 2 zeigt einen Preform 30. Der Preform 30 weist einen länglichen Körper mit einem Preformboden auf. Am Preform 30 ist ein Supportring 32 angeordnet, der den Preform 30 unterteilt. In der vorliegenden Darstellung oberhalb des Supportrings 32 ist ein Verschlussbereich 33 angeordnet. In der vorliegenden Darstellung unterhalb des Supportrings 32 weist der Preformkörper vier Vorsprünge 34 auf an denen je eine Aussenfläche 31 ausgebildet ist. Der besseren Übersichtlichkeit halber ist lediglich einer der Vorsprünge 34 und eine der Aussenflächen 31 mit Bezugszeichen versehen.

Die Figur 3 zeigt eine perspektivische Ansicht einer faserbasierten Hülle 20. Die faserbasierte Hülle 20 weist ein oberes Ende 22 auf das im Wesentlichen hohlzylindrisch ausgebildet ist. An diesem oberen Ende ist eine Innenwandung 21 ausgebildet.

Die Figur 4 zeigt einen Querschnitt durch ein Halbfabrikat 60 während des Greifens. In der Darstellung gemäss der Figur 4 ist also ein Preform 30 (siehe Figur 2) in eine faserbasierte Hülle 20 (siehe Figur 3) eingebracht. Die faserbasierte Hülle 20 weist eine Wandung mit einer Wandstärke W auf wobei diese Wandung eine Innenwandung 21 und eine Aussenwandung 23 aufweist. Die faserbasierte Hülle 20 ist mit ihrer Innenwandung 21 in Kontakt mit einer Aussenfläche 31 des Preforms 30. Die Aussenfläche 31 ist auf einem Vorsprung 34 ausgebildet. Es findet bereits eine Klemmwirkung zwischen dem Preform 30 und der faserbasierten Hülle 20 statt. In der Figur 4 ist ebenfalls ein erster Schenkel 41 eines Greifers 40 (siehe Figur 5) sichtbar. Der Schenkel 41 weist eine erste Greifbacke 43 und eine zweite Greifbacke 44 auf. Die erste Greifbacke 43 ist mit ihrer Greiffläche 431 gerade in Kontakt mit der Aussenwandung 23 der faserbasierten Hülle 20. In der Figur 4 ist ersichtlich, dass zu diesem Zeitpunkt die zweite Greifbacke 44 mit dem Abstand A zu einer Aussenfläche 35 des Verschlussbereichs 33 beabstandet ist. Zum Fixieren der faserbasierten Hülle 20 am Preform 30 wird der Schenkel 41 in Richtung zum Preform 30 hin bewegt bis der Abstand A verschwindet. Dabei wird die Wandstärke W der faserbasierten Hülle 20 um den Abstand A zusammengedrückt und entsprechend auf den Vorsprung 34 gepresst. Der Abstand A ist kleiner als die Wandstärke W und ist vorliegend etwa die Hälfte der Wandstärke W. Die Greiffläche 431 der ersten Greifbacke 43 ist hier zur Greiffläche 441 der zweiten Greifbacke 44 radial beabstandet. Der Abstand ist die Differenz der Wandstärke W und des Abstandes A plus die Höhe des Vorsprungs 34, also dem Abstand der Aussenfläche 31 zur Aussenfläche 35 des Verschlussbereichs 33. Es versteht sich, dass gegenüberliegend des Schenkels 41 ein zweiter Schenkel 42 angeordnet ist der der Einfachheit halber nicht dargestellt ist. Der zweite Schenkel 42 ist vorliegend wie der erste Schenkel 41 ausgebildet.

Wie in der Figur 4 ebenfalls ersichtlich ist, ist die erste Greifbacke 43 in Bezug zur zweiten Greifbacke 44 radial nach aussen versetzt. Vorliegend beträgt der Versatz eine Höhe des Vorsprungs 34 gegenüber der Aussenfläche 35 des Verschlussbereichs plus ca. die Hälfte der Wandstärke W.

Ebenfalls eingezeichnet ist die Höhe H der ersten Greifbacke 43.

Die Figur 5 zeigt eine perspektivische Ansicht einer Blasform 50 vor dem Schliessen. Ein Halbfabrikat 60 ist mittels eines Greifers 40, der einen ersten Schenkel 41 und einen zweiten Schenkel 42 aufweist, in eine geöffnete Blasform 50 eingebracht. Die beiden Schenkel 41 und 42 des Greifers 40 sind an zwei hier nicht dargestellten Greiferarmen angeordnet, die gemeinsam in die Blasform 50 hineingeschwenkt und herausgeschwenkt werden können.

Die Blasform 50 weist zwei nicht näher bezeichnete Blasformhälften auf, wobei auf jeder Blasformhälfte eine Hälfte einer Kopfplatte 51 angeordnet ist. Auf der Kopfplatte 51 ist eine Erhöhung ausgebildet an der ein Vorsprung 52 ausgebildet ist. Der Vorsprung 52 weist eine Höhe auf die der Höhe H der der ersten Greifbacke 43 (siehe dazu Figur 4) entspricht.

Die Figur 6 zeigt eine Detailansicht auf die Blasform 50 nach dem Schliessen. Der Supportring 32 liegt nun auf den Vorsprüngen 52 (siehe Figur 5) der Kopfplatte 51 auf. Die Schenkel 41 und 42 liegen im Wesentlichen auf der Kopfplatte 51 zwischen den Vorsprüngen 52 auf. Durch das Aufliegen der Schenkel 41 und 42 auf der Kopfplatte sind diese in axiale Richtung präzise positioniert. In dieser Illustration liegt der Supportring lediglich auf den Vorsprüngen 52 auf. Alternativ können die Vorsprünge 52 mit einer Oberfläche der jeweiligen ersten Greifbacken 43 (siehe Figur 4) eine gemeinsame Oberfläche zum Abstützen des Supportrings 32 bilden. Es ist ebenfalls möglich, dass die Schenkel 41 und 42 in der in Figur 6 gezeigten Lage noch geringfügig von der Kopfplatte 51 beabstandet sind um beim Zusammenfügen der Blasform 50 eine übermässige Reibung zu verhindern. Dabei können die Schenkel 41 und 42 während des Blasvorgangs auf die Kopfplatte 51 gepresst werden, die entsprechend ein Gegenlager bildet.

## Patentansprüche

1. Verfahren zum Blasformen eines Behälters mit einer faserbasierten Hülle (20), umfassend die Schritte
- Bereitstellen einer faserbasierten Hülle (20)
- Einbringen eines Prefoms (30) in die faserbasierte Hülle (20) zum Herstellen eines Halbfabrikats (60)
- Greifen des Halbfabrikats (60) mit einem Greifer (40)
- Überführen des Halbfabrikats (60) in ein Blasformwerkzeug (50) und
- Blasen des Behälters, **dadurch gekennzeichnet, dass** der Greifer (40) eine Innenwandung (21) der faserbasierten Hülle (20) auf eine Aussenfläche (31) des Preforms (30) presst.

2. Verfahren nach Anspruch 1, **dadurch gekennzeichnet, dass** der Greifer (40) während des Blasvorgangs das Halbfabrikat (60) kontinuierlich umgreift.

3. Verfahren nach Anspruch 1 oder 2, **dadurch gekennzeichnet, dass** der Greifer (40) während des Blasvorgangs in Anlage mit dem Blasformwerkzeug (50) ist, insbesondere mit einer Kopfplatte (51) des Blasformwerkzeuges (50).

4. Verfahren nach einem der Ansprüche 1 bis 3, **dadurch gekennzeichnet, dass** der Greifer (40) das Halbfabrikat (60) sowohl unterhalb eines Supportrings (32) des Preforms (30) als auch oberhalb des Supportrings (32) greift.

5. Verfahren nach Anspruch 4, **dadurch gekennzeichnet, dass** beim Einbringen des Preforms (30) in die faserbasierte Hülle (20) ein oberes Ende (22) der faserbasierten Hülle (20) in Anlage mit dem Supportring (32) gebracht wird.

6. Verfahren nach einem der Ansprüche 1 bis 5, **dadurch gekennzeichnet, dass** der Greifer (40) das Halbfabrikat (60) von zumindest zwei Seiten greift und einklemmt.

7. System aus einem Greifer (40) und einer Kopfplatte (51) eines Blasformwerkzeuges (50) zur Durchführung des Verfahrens nach einem der Ansprüche 1 bis 6, **dadurch gekennzeichnet, dass** der Greifer (40) eine erste Greifbacke (43) mit einer Höhe (H) aufweist und die Kopflatte (51) eine Vertiefung mit einer Tiefe, die der Höhe (H) entspricht oder einen Vorsprung (52) mit der Höhe (H).

8. System nach Anspruch 7, **dadurch gekennzeichnet, dass** die Vertiefung eine Aussenkontur aufweist, die im Wesentlichen einer Aussenkontur der Greifbacke (43) entspricht.

9. System nach Anspruch 7 oder 8, **dadurch gekennzeichnet, dass** der Greifer (40) eine zweite Greifbacke (44) aufweist die von der ersten Greifbacke (43) beabstandet ist, derart, dass zwischen der ersten Greifbacke (43) und der zweiten Greifbacke (44) ein Supportring einbringbar ist.

10. System nach einem der Ansprüche 7 bis 9, **dadurch gekennzeichnet, dass** der Greifer (40) einen ersten Schenkel (41) und einen zweiten Schenkel (42) aufweist, wobei an jedem Schenkel (41, 42) eine erste Greifbacke (43) angeordnet ist.

11. System nach Anspruch 9 und 10, **dadurch gekennzeichnet, dass** zumindest an einem, vorzugsweise an jedem, Schenkel (41, 42) eine zweite Greifbacke (44) angeordnet ist.

12. System nach einem der Ansprüche 7 bis 11, **dadurch gekennzeichnet, dass** die erste Greifbacke (43) eine Greiffläche (431) aufweist, die sich entlang eines Kreisringes über einen Winkel von mindestens 30° erstreckt.

13. System nach einem der Ansprüche 9 bis 12, **dadurch gekennzeichnet, dass** die zweite Greifbacke (44) eine Greiffläche (441) aufweist, die sich entlang eines Kreisringes über einen Winkel von mindestens 30° erstreckt.

14. System nach einem der Ansprüche 9 bis 13, **dadurch gekennzeichnet, dass** die erste Greiffläche (431) und die Zweite Greiffläche (441) in einer radialen Richtung zueinander versetzt sind, insbesondere um eine Wandstärke (W) der faserbasierten Hülle.

15. Blasformmaschine umfassend ein System nach einem der Ansprüche 7 bis 14.

## Claims

1. A method for blow molding a container having a fiber-based shell (20), comprising the steps of
- providing a fiber-based shell (20)
- introducing a preform (30) into the fiber-based shell (20) in order to produce a semi-finished product (60)
- gripping the semi-finished product (60) by means of a gripper (40)
- transferring the semi-finished product (60) into a blow molding tool (50) and
- blowing the container **characterized in that** the gripper (40) presses an inner wall (21) of the fiber-based shell (20) onto an outer surface (31) of the preform (30).

2. The method according to claim 1, **characterized in that** the gripper (40) surrounds the semi-finished product (60) continuously during the blowing process.

3. The method according to claim 1 or 2, **characterized in that** the gripper (40) is in contact with the blow molding tool (50), in particular with a head plate (51) of the blow molding tool (50), during the blowing process.

4. The method according to any one of claims 1 to 3, **characterized in that** the gripper (40) grips the semi-finished product (60) both below a support ring (32) of the preform (30) and above the support ring (32).

5. The method according to claim 4, **characterized in that**, as the preform (30) is introduced into the fiber-based shell (20), an upper end (22) of the fiber-based shell (20) is brought into contact with the support ring (32).

6. The method according to any one of claims 1 to 5, **characterized in that** the gripper (40) grips and clamps the semi-finished product (60) from at least two sides.

7. A system composed of a gripper (40) and a head plate (51) of a blow molding tool (50) for carrying out the method according to any one of claims 1 to 6, **characterized in that** the gripper (40) has a first gripping jaw (43) with a height (H) and the head plate (51) has a recess with a depth corresponding to the height (H) or has a projection (52) with the height (H).

8. The system according to claim 7, **characterized in that** the recess has an outer contour which substantially corresponds to an outer contour of the gripping jaw (43).

9. The system according to claim 7 or 8, **characterized in that** the gripper (40) has a second gripping jaw (44), which is spaced apart from the first gripping jaw (43) in such a way that a support ring can be introduced between the first gripping jaw (43) and the second gripping jaw (44).

10. The system according to any one of the claims 7 to 9, **characterized in that** the gripper (40) has a first member (41) and a second member (42), on each of which members (41, 42) a first gripping jaw (43) is arranged.

11. The system according to claim 9 and 10, **characterized in that** a second gripping jaw (44) is arranged at least on one, preferably on each, member (41, 42).

12. The system according to any one of claims 7 to 11, **characterized in that** the first gripping jaw (43) has a gripping surface (431) which extends along a circular ring over an angle of at least 30°.

13. The system according to any one of claims 9 to 12, **characterized in that** the second gripping jaw (44) has a gripping surface (441) which extends along a circular ring over an angle of at least 30°.

14. The system according to any one of claims 9 to 13, **characterized in that** the first gripping surface (431) and the second gripping surface (441) are offset relative to one another in a radial direction, in particular by a wall thickness (W) of the fiber-based shell.

15. A blow molding machine comprising a system according to any one of claims 7 to 14.

## Revendications

1. Procédé de moulage par soufflage d'un récipient avec une enveloppe (20) à base de fibres, comprenant les étapes de
- mise à disposition d'une enveloppe (20) à base de fibres,
- mise en place d'une préforme (30) dans l'enveloppe (20) à base de fibres, aux fins de fabrication d'un produit semi-fini (60),
- saisie du produit semi-fini (60) avec un préhenseur (40),
- transfert du produit semi-fini (60) dans un outil de moulage par soufflage (50), et
- soufflage du récipient, **caractérisé en ce que** le préhenseur (40) presse une paroi intérieure (21) de l'enveloppe (20) à base de fibres sur une surface extérieure (31) de la préforme (30).

2. Procédé selon la revendication 1, **caractérisé en ce que** le préhenseur (40) entoure en continu le produit semi-fini (60) pendant l'opération de soufflage.

3. Procédé selon la revendication 1 ou 2, **caractérisé en ce que** pendant l'opération de soufflage, le préhenseur (40) est en appui contre l'outil de moulage par soufflage (50), notamment contre une plaque de tête (51) de l'outil de moulage par soufflage (50).

4. Procédé selon une des revendications 1 à 3, **caractérisé en ce que** le préhenseur (40) saisit le produit semi-fini (60) à la fois sous une bague de support (32) de la préforme (30) et au-dessus de la bague de support (32).

5. Procédé selon la revendication 4, **caractérisé en ce que** lors de la mise en place de la préforme (30) dans l'enveloppe (20) à base de fibres, une extrémité supérieure (22) de l'enveloppe (20) à base de fibres est amenée en appui contre la bague de support (32).

6. Procédé selon une des revendications 1 à 5, **caractérisé en ce que** le préhenseur (40) saisit le produit semi-fini (60) depuis au moins deux côtés et le serre.

7. Système constitué d'un préhenseur (40) et d'une plaque de tête (51) d'un outil de moulage par soufflage (50) pour la mise en œuvre du procédé selon une des revendications 1 à 6, **caractérisé en ce que** le préhenseur (40) présente un premier mors de préhension (43) d'une hauteur (H), et la plaque de tête (51) présente un évidement ayant une profondeur qui correspond à la hauteur (H), ou une saillie (52) de la hauteur (H).

8. Système selon la revendication 7, **caractérisé en ce que** l'évidement présente un contour extérieur qui correspond sensiblement à un contour extérieur du mors de préhension (43).

9. Système selon la revendication 7 ou 8, **caractérisé en ce que** le préhenseur (40) présente un deuxième mors de préhension (44) qui se trouve à distance du premier mors de préhension (43), de manière à ce qu'une bague de support puisse être insérée entre le premier mors de préhension (43) et le deuxième mors de préhension (44).

10. Système selon une des revendications 7 à 9, **caractérisé en ce que** le préhenseur (40) présente un premier bras (41) et un deuxième bras (42), un premier mors de préhension (43) étant disposé sur chaque bras (41, 42).

11. Système selon la revendication 9 et 10, **caractérisé en ce qu'**un deuxième mors de préhension (44) est disposé sur au moins un, de préférence sur chaque bras (41, 42).

12. Système selon une des revendications 7 à 11, **caractérisé en ce que** le premier mors de préhension (43) présente une surface de préhension (431) qui s'étend le long d'un anneau de cercle, sur un angle d'au moins 30°.

13. Système selon une des revendications 9 à 12, **caractérisé en ce que** le deuxième mors de préhension (44) présente une surface de préhension (441) qui s'étend le long d'un anneau de cercle, sur un angle d'au moins 30°.

14. Système selon une des revendications 9 à 13, **caractérisé en ce que** la première surface de préhension (431) et la deuxième surface de préhension (441) sont décalées l'une par rapport à l'autre dans une direction radiale, notamment d'une épaisseur de paroi (W) de l'enveloppe à base de fibres.

15. Machine de moulage par soufflage comprenant un système selon une des revendications 7 à 14.
